(19) Europäisches Patentamt
European Patent Office
Office européen des brevets

(11) **EP 0 526 099 B1**

(12) **EUROPEAN PATENT SPECIFICATION**

(45) Date of publication and mention
of the grant of the patent:
**01.10.1997 Bulletin 1997/40**

(51) Int. Cl.$^6$: **B01D 53/94**, B01J 23/50,
B01J 37/20

(21) Application number: **92306728.4**

(22) Date of filing: **23.07.1992**

(54) **Exhaust gas cleaner**

Abgasreiniger

Epurateur des gaz d'échappement

(84) Designated Contracting States:
**DE FR GB**

(30) Priority: **23.07.1991 JP 206529/91**
**30.09.1991 JP 280482/91**
**30.09.1991 JP 280825/91**
**30.09.1991 JP 280479/91**
**30.09.1991 JP 280476/91**
**25.02.1992 JP 73399/92**
**30.04.1992 JP 137959/92**
**30.04.1992 JP 138070/92**
**08.07.1992 JP 204539/92**

(43) Date of publication of application:
**03.02.1993 Bulletin 1993/05**

(60) Divisional application: **95201503.0**

(73) Proprietors:
• **KABUSHIKı KAISHA RIKEN**
**Tokyo (JP)**
•
**AGENCY OF INDUSTRIAL SCIENCE AND TECHNOLOGY**
**Tsukuba-gun, Ibaraki-ken (JP)**

(72) Inventors:
• **Yoshida, Kiyohide,**
**c/o K.K. Riken**
**Kumagaya-shi, Saitama-Ken (JP)**
• **Muramatsu, Gyo,**
**c/o K.K. Riken**
**Kumagaya-shi, Saitama-Ken (JP)**
• **Abe, Akira,**
**c/o K.K. Riken**
**Kumagaya-shi, Saitama-Ken (JP)**
• **Miyadera, Tatsuo**
**Tsukuba-shi, Ibaraki-ken (JP)**

(74) Representative: **Calamita, Roberto**
**Frank B. Dehn & Co.,**
**European Patent Attorneys,**
**179 Queen Victoria Street**
**London EC4V 4EL (GB)**

(56) References cited:
EP-A- 475 173          EP-A- 0 362 960
EP-A- 0 455 491          EP-A- 0 459 396
DE-A- 2 411 888

Remarks:
Divisional application 95201503.0 filed on 23/07/92.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to an exhaust gas cleaner for cleaning an exhaust gas containing nitrogen oxides and oxygen in an amount larger than its stoichiometric amount relative to unburned components such as carbon monoxide, hydrogen, hydrocarbons in the exhaust gas, and a method of cleaning such an exhaust gas.

Various exhaust gases discharged from internal combustion engines such as automobile engines, etc., combustion apparatuses installed in factories, home fan heaters, etc. contain nitrogen oxides such as nitrogen monoxide, nitrogen dioxide (hereinafter referred to simply as "NOx") and oxygen in an amount larger than its stoichiometric amount relative to unburned components. The NOx is one of causes of air pollution such as photochemical smog and acidic rain, posing a serious problem of environmental pollution in a global scale. For these reasons, it is desired to remove NOx from exhaust gases emitted from various combustion equipments.

In the case of an exhaust gas from gasoline engines, NOx is usually removed by using so-called three-component catalysts. Also, in the case of large, stationary combustion apparatuses such as internal combustion engines for cogenerators, etc., ammonia is introduced into an exhaust gas, whereby nitrogen oxides in the exhaust gas are catalytically and selectively reduced.

However, in the case of an exhaust gas having a relatively high oxygen concentration such as those discharged from diesel engines and those discharged from gasoline engines operable in a lean condition, efficient removal of NOx cannot be achieved with the above-described three-component catalysts suitable for usual gasoline engines. Also, the reduction of NOx with ammonia introduced into an exhaust gas cannot be applied to movable exhaust gas sources such as automobiles, because this reduction system needs large apparatuses and poisonous, expensive ammonia.

Therefore, it has been desired to develop a method of reducing NOx in the exhaust gas having a relatively high oxygen concentration which is discharged from diesel engines, etc., and various attempts have been made so far.

For instance, there have been proposed methods of reducing NOx in an exhaust gas with a hydrocarbon introduced into the exhaust gas. One example of such methods is disclosed by Japanese Patent Publication No. 44-13002, which comprises passing an exhaust gas through a honeycomb-type ceramic filter carrying a platinum-group metal catalyst while controlling the temperature and flow rate of the exhaust gas, and adding a gaseous reducing fuel (specifically, methane, etc.) to the exhaust gas.

However, this method fails to efficiently reduce NOx in the exhaust gas discharged from diesel engines, etc. According to research by the inventors, even though a hydrocarbon having a small carbon number which is in a gas state in a normal condition, such as methane, propane, etc. is added as an NOx-reducing agent to the exhaust gas discharged from diesel engines, a large removal ratio of NOx cannot be obtained.

There has also been proposed a method of cleaning an exhaust gas, which comprises mixing an exhaust gas containing oxygen and NOx with a hydrocarbon to cause a reaction between oxygen and a hydrocarbon such that the hydrocarbon is partially oxidized to a reducing hydrogen gas and carbon monoxide and to lower the oxygen concentration, the resulting hydrogen gas and carbon monoxide being reacted with NOx in the exhaust gas, thereby decomposing them to nitrogen, carbon dioxide and water (Japanese Patent Laid-Open No. 49-122474). However, since the reduction reaction of NOx should be conducted at a relatively high temperature in this method, it is not suitable for cleaning the exhaust gas of automobiles.

There is an alternative method for reducing NOx which comprises adding a petroleum fuel as a reducing agent to a combustion exhaust gas in a high-temperature region alone or together with part of the combustion exhaust gas with or without air, and adding an air to the combustion exhaust gas in the downstream to reduce NOx in the combustion exhaust gas, the addition of the petroleum fuel such as methane, propane, gasoline, kerosine, naphtha, heavy oil, etc. being conducted by a plurality of steps such that a ratio of the amount of oxygen remaining in the exhaust gas to the amount of oxygen necessary for completely burning the petroleum fuel added is within a particular range (Japanese Patent Laid-Open No. 54-79161).

However, this method cannot remove NOx efficiently without keeping a region where a reducing agent and NOx are reacted at 1000°C or higher. Thus, this method is also not suitable for cleaning the exhaust gas of automobiles.

There has also been proposed a method of cleaning an exhaust gas, which comprises contacting an exhaust gas containing oxygen and NOx with a gaseous reducing agent such as hydrogen, and carbon monoxide. However, since a catalyst is not used in this method, a large amount of the reducing agent should be added. Accordingly, this non-catalytic method is effective only for the exhaust gas having a relatively low oxygen concentration, which is generated by burning nearly at a theoretical air-fuel ratio.

There have been proposed methods of reducing NOx by adding to an exhaust gas a reducing agent in a larger amount than a stoichiometric amount relative to oxygen in the exhaust gas, in the presence of a catalyst such as zeolite carrying a transition metal (Japanese Patent Laid-Open Nos. 63-100919, 63-283727, and 1-130735, Thesis 2A526, 1990, the 59th Spring Conference of the Japan Chemical Society, Theses 3L420, 3L422 and 3L423, 1990, the 60th Fall Conference of the Japan Chemical Society).

However, the catalysts used in these methods are poor in efficiency when moisture is contained in the exhaust gas, and an actual gas contains about 10% of moisture. Accordingly, the methods using such catalysts fail to achieve a high reduction ratio of NOx in the actual exhaust gas. In addition, the optimum temperature of the reduction reaction of NOx is as high as nearly 600°C in these methods.

There has also been proposed a method of cleaning an exhaust gas, which comprises introducing methanol into the exhaust gas and bringing the exhaust gas containing methanol with alumina at about 300°C ("Catalyst, Vol. 33, No. 2, 59 (1991)). However, this method is poor in efficiency of removing nitrogen oxide.

EP-A-455491 describes an exhaust gas cleaner comprising a catalyst comprising (A) $TiO_2$, (B) at least one of $Al_2O_3$, $SiO_2$ and $ZrO_2$, and (C) at least one of Ru, Rh, Pd, Ag and Pt.

EP-A-475173, which is Article 54 (3) EPC prior art, describes a catalyst system for treating nitrogen oxides in gases, in which an aluminium oxide carrier has a BET-surface area of 5-25 $m^2/g$.

Accordingly, an object of the present invention is to provide a method capable of efficiently removing NOx from an exhaust gas containing nitrogen oxide and oxygen in an amount larger than the stoichiometric amount relative to unburned components such as carbon monoxide, hydrogen, hydrocarbons, etc., which is discharged from diesel engines, gasoline engines operated under oxygen excess conditions, and stationary combustion apparatuses.

Another object of the present invention is to provide an exhaust gas cleaner capable of reducing nitrogen oxide in the exhaust gas efficiently at a relatively low temperature.

As a result of intense research in view of the above objects, the inventors have found that in the exhaust gas containing nitrogen oxides and oxygen in an amount larger than its stoichiometric amount relative to unburned components such as carbon monoxide, hydrogen, hydrocarbons, nitrogen oxides are effectively reduced, even when the exhaust gas contains about 10% of moisture, in the presence of an exhaust gas cleaner comprising a heat-resistant, porous inorganic oxide body and a metal component such as silver or its oxide, by adding reducing agents such as hydrocarbons, aliphatic alcohols, and other aliphatic oxygen-containing organic compounds to the exhaust gas to cause a reaction between the reducing agents and nitrogen oxides.

Thus, in one aspect the present invention provides an exhaust gas cleaner for cleaning an exhaust gas containing nitrogen oxides and oxygen in an amount larger than its stoichiometric amount relative to unburned components in said exhaust gas, which comprises a heat-resistant, porous inorganic oxide body having a specific surface area of 30 $m^2/g$ or more made of $\gamma$-alumina and which is impregnated with a catalytically active component consisting essentially of Ag or its oxide, the amount of said Ag or its oxide on a silver metal basis being 0.1-15 weight % based on said porous inorganic oxide body.

In a second aspect, the present invention provides a method of cleaning an exhaust gas containing nitrogen oxides and oxygen in an amount larger than its stoichiometric amount relative to unburned components in said exhaust gas, which comprises

(a) disposing an exhaust gas cleaner which comprises a heat-resistant, porous inorganic oxide body made of $\gamma$-alumina and which is impregnated with a catalytically active component consisting essentially of Ag or its oxide, the amount of said Ag or its oxide on a silver metal basis being 0.1-6 weight % based on said porous inorganic oxide body;

(b) introducing a reducing agent selected from the group consisting of gaseous hydrocarbons and liquid hydrocarbons into said exhaust gas on the upstream side of said exhaust gas cleaner; and

(c) bringing said exhaust gas containing said reducing agent into contact with said exhaust gas cleaner at a temperature of 200-600°C to cause a reaction between said nitrogen oxides and said reducing agent, thereby removing said nitrogen oxides.

In a third aspect, the present invention provides a method of cleaning an exhaust gas containing nitrogen oxides and oxygen in an amount larger than its stoichiometric amount relative to unburned components in said exhaust gas, which comprises:

(a) disposing an exhaust gas cleaner in a flow path of said exhaust gas, said exhaust gas cleaner comprising a heat-resistant, porous inorganic oxide body made of alumina or a composite oxide thereof and being impregnated with a catalytically active component consisting essentially of Ag or its oxide, and the amount of said Ag or its oxide on a silver metal basis being 0.1-15 weight % based on said porous inorganic oxide body;

(b) introducing an aliphatic oxygen-containing organic compound into said exhaust gas on the upstream side of said exhaust gas cleaner; and

(c) bringing the exhaust gas containing said aliphatic oxygen-containing organic compound into contact with said exhaust gas cleaner at a temperature of 200-600°C to cause a reaction between said nitrogen oxides and said aliphatic oxygen-containing organic compound, thereby removing said nitrogen oxides.

The invention will be described with reference to the accompanying drawings, in which:

Fig. 1 is a schematic view showing an exhaust gas-cleaning apparatus for cleaning an exhaust gas according to the present invention;

Fig. 2 is a graph showing the relation between the removal ratio of NOx and the temperature of the exhaust gas in Examples 13-15;

Fig. 3 is a graph showing the relation between the removal ratio of NOx and the temperature of the exhaust gas in Comparative Examples 5-7;

Fig. 4 is a graph showing the relation between the removal ratio of NOx and the temperature of the exhaust gas in Examples 16-18;

Fig. 5 is a graph showing the relation between the removal ratio of NOx and the temperature of the exhaust gas in Examples 19-21; and

Fig. 6 is a graph showing the relation between the removal ratio of NOx and the temperature of the exhaust gas in Examples 31 and 32 and Comparative Example 10.

The present invention will be explained in detail below.

[1] Exhaust Gas-Cleaning Apparatus

[A] Overall System

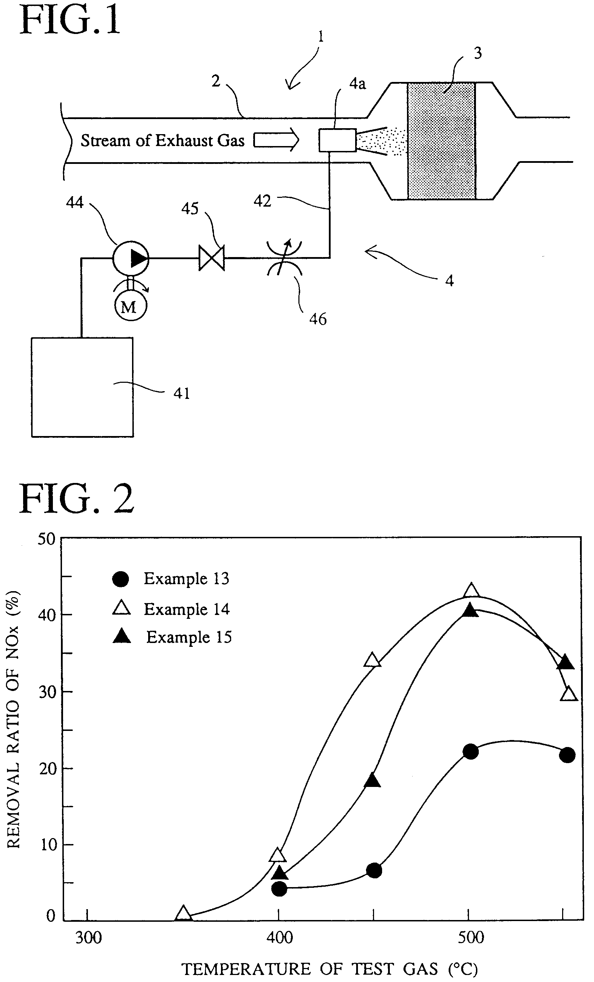

Referring to Fig. 1, the exhaust gas-cleaning apparatus 1 which uses a liquid hydrocarbon as a reducing agent comprises a pipe 2 through which an exhaust gas passes, an exhaust gas cleaner 3 comprising a heat-resistant, porous inorganic oxide body disposed in the pipe 2, and a reducing agent supply system 4 comprising a spray means 4a disposed in the pipe 2 on the upstream side of the exhaust gas cleaner 3 for spraying a reducing agent into a stream of the exhaust gas.

The reducing agent supply system 4 comprises a reducing agent-storing tank 41, and a reducing agent supply pipe 42 communicating with a spray nozzle 4a for introducing the reducing agent into the exhaust gas. Disposed in the reducing agent supply pipe 42 are a pump 44 for supplying the reducing agent to the spray nozzle 4a, a throttle valve 45 for controlling the flow rate of the reducing agent, and a switch valve 46 for opening or shutting the pipe 42. Instead of the pump 44, a pressure means (not shown) may be mounted to the tank 41 so that the reducing agent can be ejected at a proper pressure. The spray nozzle 4a comprises only one thin flow path (not shown) through which the reducing agent passes, and the amount of the reducing agent supplied to the spray nozzle 4a is controlled by the throttle valve 45 and the switch valve 46.

If the air is to be introduced into the exhaust gas together with the reducing agent, an air pipe (not shown) for supplying a proper amount of a compressed air may be connected to the spray nozzle 4a.

Although this apparatus is adapted to be used for a reducing agent which is in a liquid state in a normal state (1 atm and room temperature), it may be modified by omitting the pump 44 such that it is used for a gaseous reducing agent.

[B] Exhaust Gas Cleaner

(a) Heat-Resistant, Porous Inorganic Oxide Body

The exhaust gas cleaner 3 disposed in the exhaust gas-cleaning apparatus 1 comprises a porous inorganic oxide body serving as sites of reaction between a reducing agent and nitrogen oxides in the exhaust gas. Since the heat-resistant, porous inorganic oxide body is exposed to a high-temperature exhaust gas, it is required to have an excellent heat resistance, and particularly an excellent thermal shock resistance. Such a porous inorganic oxide body may preferably be constituted by porous pellets or granules packed in a casing, or in the form of a solid body such as a honeycomb, a foam or a plate, or in a composite form composed of a heat-resistant substrate and a porous inorganic oxide layer formed on the substrate.

(i) Porous Inorganic Oxide Pellets, etc

Materials for the porous inorganic oxide pellets, etc. include ceramics such as alumina, titania, zirconia and their composites, etc. Particularly preferable materials for the porous inorganic oxide pellets, etc. are $\gamma$-alumina or its composite oxide such as titania-alumina, silica-alumina, zirconia-alumina, etc. With catalytically active $\gamma$-alumina, the added reducing agent and the nitrogen oxides in the exhaust gas are reacted efficiently.

Since NOx in the exhaust gas is reacted with a reducing agent while the exhaust gas is passing through the exhaust gas cleaner, it is preferable that the pressure drop of the exhaust gas in the exhaust gas cleaner is within a permissible range, and that the porous inorganic oxide body has a large surface area which is brought into contact with the exhaust gas. In the above respects, it is preferable that a specific surface area of the porous inorganic oxide body is

preferably about 30 m$^2$/g or more. When the specific surface area is smaller than about 30 m$^2$/g, a sufficient reaction between the nitrogen oxides in the exhaust gas and the reducing agent added cannot take place in the exhaust gas cleaner.

(ii) Porous Inorganic Oxide Layer

Materials for the porous inorganic oxide layers include ceramics such as alumina, titania, zirconia and their composites, etc Particularly preferable materials are γ-alumina or its composite oxide such as titania-alumina, silica-alumina, zirconia-alumina, etc. With catalytically active γ-alumina, the added reducing agent and the nitrogen oxides in the exhaust gas are reacted efficiently. Incidentally, a specific surface area of the porous inorganic oxide body is preferably about 30 m$^2$/g or more.

A heat-resistant substrate for supporting the porous inorganic oxide layer may be made of ceramics such as alumina, silica, titania, zirconia and their composites such as silica-alumina, alumina-zirconia, alumina-titania, silica-titania, silica-zirconia, titania-zirconia, mullite, cordierite, etc. The heat-resistantsubstrate may be in the form of a honeycomb filter, a foam filter, a fiber assembly filter, pellets, etc.

The porous inorganic oxide layer formed on the heat-resistant substrate has preferably a surface specific area of about 30 m$^2$/g or more.

The porous inorganic oxide layer may be formed on the heat-resistant substrate by a known wash-coating method, a known sol-gel method, etc.

In the wash-coating method, the heat-resistant substrate is immersed in a slurry of the above ceramic powder and dried so that a porous inorganic oxide layer is formed on the heat-resistant substrate. To cause the porous inorganic oxide layer to support Ag or its oxide, there are two methods available: (1) a method of applying Ag or its oxide by impregnation or precipitation to the carrier layer (porous inorganic oxide layer) wash-coated on the heat-resistant substrate, and (2) a method of forming an Ag or its oxide-supporting porous inorganic oxide layer on the heat-resistant substrate by wash-coating the heat-resistant substrate with a suspension of Ag or its oxide-containing ceramic powder. According to the latter method (2), the porous inorganic oxide layer supporting Ag or its oxide can be formed by a single step.

In the sol-gel method, the following procedure can be conducted.

The preferred sol-gel method comprises hydrolyzing organic salts (for instance, alkoxides) of the porous inorganic oxide layer-constituting metals; applying the resulting sol to the heat-resistant substrate; bringing the coated heat-resistant substrate into contact with water vapor, etc. to form a layer composed of colloidal particles; drying and burning it to convert it to a carrier layer for Ag or its oxide; and applying Ag or its oxide to the carrier layer. For instance, when Ag or its oxide is to be supported by an alumina ($Al_2O_3$) carrier layer, a solution of Al alkoxide (for instance, Al(O-isoC$_3$H$_7$)$_3$ in alcohol is mixed with an acid such as CH$_3$COOH, HNO$_3$, HCl, etc. to prepare a coating solution, and the heat-resistant substrate is immersed in the coating solution. After removing the heat-resistant substrate from the coating solution, it is reacted with vapor or water to cause gelation. After drying and burning, a thin alumina coating is formed on a porous surface of the heat-resistant substrate. Next, the coated heat-resistant substrate is impregnated with aqueous solutions of carbonates, nitrates, acetates, hydroxides, etc. of Ag; and the impregnated layer is dried and burned on the heat-resistant substrate.

By using the sol-gel method, the Ag or its oxide can be extremely uniformly dispersed in the heat-resistant substrate, leading to an increase in catalytic activity.

In the sol-gel method, the acid serves as a hydrolysis catalyst in the course of gelation. However, alkali metals may be added in place of the acids to conduct the hydrolysis reaction.

(b) Ag or Its Oxide

Ag or its oxide may be supported by the porous inorganic oxide body. When Ag or its oxide is supported, the amount of Ag or its oxide is generally 0.1-15 weight % (on a silver metal basis) based on the porous inorganic oxide body. When the amount of Ag or its oxide is less than 0.1 weight %, sufficient effect of Ag or its oxide cannot be obtained. On the other hand, even when the amount of Ag or its oxide exceeds 15 weight %, further advantage of increasing the efficiency of reducing nitrogen oxides cannot be achieved.

Incidentally, when acetylene is added, the Ag or its oxide may not exist on the exhaust gas cleaner. However, to increase the exhaust gas-removing efficiency, the Ag or its oxide added is preferably 0.1-10 weight %, and more preferably 0.1-5 weight %. When the liquid or gaseous hydrocarbons or the aliphatic oxygen-containing organic compounds are added, the amount of Ag or its oxide is 0.1-15 weight %, and preferably 0.5-10 weight %.

With respect to the production of the exhaust gas cleaner, the porous inorganic oxide body is first immersed in an aqueous solution of a silver salt such as silver nitrate, and then dried and burned. The substrate impregnated with Ag or its oxide may also be produced under the same conditions.

The porous inorganic oxide body is preferably dried and then burned in a non-oxidizing atmosphere such as vacuum, a nitrogen atmosphere, or a hydrogen atmosphere. The drying of the porous inorganic oxide body is preferably conducted at about 70°C or higher. With respect to the burning conditions, when the burning is conducted in the above atmosphere, the resulting exhaust gas cleaners are catalytically more active than those burned in the air. Also, the burning of the exhaust gas cleaner is preferably conducted at a temperature increasing stepwise from about 100°C to about 600°C in the above non-oxidizing atmosphere, and then at about 550°C or higher in an oxygen-containing atmosphere.

Incidentally, the term "Ag or its oxide" is used herein to express a silver component carried by the porous inorganic oxide body produced by the above method.

(c) Treatment of Exhaust Gas Cleaner with $SO_2$

The exhaust gas cleaner carrying Ag or its oxide is preferably treated with a $SO_2$ gas. In general, 1 g of the exhaust gas cleaner carrying Ag or its oxide is brought into contact with 0.02-1 mmol of $SO_2$. When the amount of $SO_2$ is smaller than 0.02 mmol, sufficient effect of treatment cannot be achieved. On the other hand, even when the amount of $SO_2$ exceeds 1 mmol, further improvement of the catalytic activity cannot be obtained.

With the exhaust gas cleaner treated with $SO_2$, hydrocarbons and aliphatic oxygen-containing organic compounds added are not directly oxidized by oxygen in the exhaust gas. Accordingly, sufficient reaction between the nitrogen oxides and the hydrocarbons and aliphatic oxygen-containing organic compounds can proceed.

[2] Method of Cleaning Exhaust Gas

[A] Reducing Agents

The exhaust gas discharged from diesel engines, etc. contains small amounts of hydrocarbons such as acetylene, ethylene, propylene, etc. which can act as reducing agents for reducing the nitrogen oxides in the exhaust gas. In general, the proportion of the unburned unsaturated hydrocarbon remaining in the exhaust gas is about 40 ppm, and it can be increased to some extent by adjusting engine conditions, etc. However, when hydrocarbons do not remain in the exhaust gas in sufficient amount to reduce all nitrogen oxides in the exhaust gas, reducing agents such as hydrocarbons, alcohols, etc. are added to the exhaust gas on the upstream side of the exhaust gas cleaner in a flow path of the exhaust gas.

The reducing agents added to the exhaust gas are gaseous or liquid hydrocarbons, or aliphatic oxygen-containing organic compounds such as aliphatic alcohols.

(a) Hydrocarbons

The hydrocarbons added to the exhaust gas may be in the form of a liquid or a gas.

(i) Liquid Hydrocarbons

The liquid hydrocarbon used in the present invention, which is in a liquid state under a normal condition (room temperature and 1 atm), includes diesel oil, cetane, heptane, kerosine, etc. Its boiling point is room temperature - about 350°C. Preferred examples of such hydrocarbons are diesel oil, cetane, heptane, etc. When a hydrocarbon having a boiling point exceeding about 450°C is added, it is not easily evaporated at an exhaust gas temperature under a normal operation condition, failing to accelerate the reduction of NOx. For safety operation, the upper limit of the boiling temperature of the hydrocarbon is set at about 350°C. Preferably, a hydrocarbon having a boiling point of about 90°C - 350 °C, particularly 160-340°C is used. Such a hydrocarbon is typically diesel oil for a practical reason.

The amount of the liquid hydrocarbon added is properly determined depending on the amount of NOx in the exhaust gas. Specifically, a weight ratio of the liquid hydrocarbon to NOx in the exhaust gas is 0.2-5. When the weight ratio of the liquid hydrocarbon to NOx is less than 0.2, sufficient effect of adding the liquid hydrocarbon cannot be obtained. On the other hand, when the weight ratio of the liquid hydrocarbon to NOx is more than 5, an excess liquid hydrocarbon remains in the exhaust gas discharged to the atmosphere. The preferred weight ratio of the liquid hydrocarbon to NOx is 0.2-3.

(ii) Gaseous Hydrocarbons

The gaseous hydrocarbons (alkanes, alkenes or alkynes) used in the present invention are in a gaseous state in a normal state (room temperature and 1 atm). The preferred alkanes are propane, butane, etc., the preferred alkenes are ethylene, propylene, butylene, etc., and the preferred alkynes are acetylene, etc.

The amount of the gaseous hydrocarbon is 20-400 volume % based on the amount of the nitrogen oxides in the exhaust gas. When the amount of the gaseous hydrocarbon is less than 20 volume %, high efficiency of removing the nitrogen oxides cannot be achieved. On the other hand, when the amount of the gaseous hydrocarbon is more than 400 volume %, the unreacted gaseous hydrocarbon remains in the exhaust gas, causing a secondary pollution. Incidentally, since a small amount of hydrocarbon is already contained in the exhaust gas, the above amount of the gaseous hydrocarbon is determined such that after the addition of the gaseous hydrocarbon, the amount of the gaseous hydrocarbon in the exhaust gas is 20-400 volume %. Accordingly, if the exhaust gas contains a gaseous hydrocarbon at a sufficient level (more than 20 volume %), the addition of the gaseous hydrocarbon is not necessary. The preferred amount of the gaseous hydrocarbon is 20-300 volume % based on the nitrogen oxides in the exhaust gas.

(b) Aliphatic Oxygen-Containing Organic Compounds

The aliphatic oxygen-containing organic compound used in the present invention has 2 or more carbon atoms and 1 or more oxygen atoms. Specific examples of such aliphatic oxygen-containing organic compound include alcohols, ketones, aldehydes, carboxylic acids, ethers, esters, etc. With respect to the upper limit of the carbon number in the aliphatic oxygen-containing organic compound, it is preferably determined such that the boiling point of the aliphatic oxygen-containing organic compound does not exceed 400°C.

(i) Alcohols

As alcohols, monovalent aliphatic alcohols having low molecular weights such as ethanol, propanol (n-propyl alcohol, isopropyl alcohol), etc. are preferable. However, methanol is not effective to react with nitrogen oxides. Accordingly, the carbon number of the aliphatic alcohol is restricted to 2 or more.

(ii) Ketones

As ketones, acetone may be used.

(iii) Carboxylic Acids

As carboxylic acids, acetic acid is particularly preferable.

(iv) Aldehydes

As aldehydes, acetaldehyde is particularly preferable.

The amount of the aliphatic oxygen-containing organic compound is 0.2-4 weight % based on 100 weight % of the nitrogen oxides in the exhaust gas. When the amount of the aliphatic oxygen-containing organic compound is less than 0.2 weight %, high efficiency of removing the nitrogen oxides cannot be achieved. On the other hand, when the amount of the aliphatic oxygen-containing organic compound is more than 4 weight %, the unreacted aliphatic oxygen-containing organic compound remains in the exhaust gas, causing a secondary pollution. The preferred amount of the aliphatic oxygen-containing organic compound is 1-3 weight % based on the nitrogen oxides in the exhaust gas.

[B] Temperature of Exhaust Gas

The exhaust gas passes through the exhaust gas cleaner at a temperature of 200-600°C, so that a reaction between the nitrogen oxides in the exhaust gas and the reducing agent can react with each other at a high efficiency.

(a) In a case where a gaseous hydrocarbon (alkane, alkene or alkyne) is added, the temperature of the exhaust gas is 200-600°C. When the temperature of the exhaust gas is lower than 200°C, a sufficient reaction between the nitrogen oxides and gaseous hydrocarbon cannot proceed. On the other hand, when the temperature of the exhaust gas is higher than 600°C, the gaseous hydrocarbon itself is burned, failing to reduce the nitrogen oxides effectively. The more preferred temperature of the exhaust gas is 250-600°C.

Particularly, in the case of acetylene, the temperature of the exhaust gas is 250-550°C. When the temperature of the exhaust gas is lower than 250°C, a sufficient reaction between the nitrogen oxides and acetylene cannot proceed. On the other hand, when the temperature of the exhaust gas is higher than 550°C, acetylene itself is burned, failing to reduce the nitrogen oxides effectively. The more preferred temperature of the exhaust gas is 300-550°C.

(b) In a case where the liquid hydrocarbon is added, the temperature of the exhaust gas is 300-550°C. When the temperature of the exhaust gas is lower than 300°C, a sufficient reaction between the nitrogen oxides and the liquid hydrocarbon cannot proceed. On the other hand, when the temperature of the exhaust gas is higher than 550°C, the liquid hydrocarbon itself is burned, failing to reduce the nitrogen oxides effectively. The more preferred temperature of the exhaust gas is 350-500°C.

(c) In a case where the aliphatic oxygen-containing organic compound is added, the temperature of the exhaust gas is 200-600°C. When the temperature of the exhaust gas is lower than 200°C, a sufficient reaction between the nitrogen oxides and the aliphatic oxygen-containing organic compound cannot proceed. On the other hand, when the temperature of the exhaust gas is higher than 600°C, the aliphatic oxygen-containing organic compound itself is burned, failing to reduce the nitrogen oxides effectively.

Particularly, in the cases of alcohols and ketones, the temperature of the exhaust gas is preferably 200-550°C, more preferably 250-500°C. In the case of carboxylic acids, the temperature of the exhaust gas is preferably 300-600°C, and more preferably 350-550°C.

Incidentally, since the measurement of the temperature of the exhaust gas in the exhaust gas cleaner is often very difficult, the temperature of the exhaust gas in the exhaust gas pipe 2 slightly upstream of the exhaust gas cleaner 3 may be measured and used as a substitute for the temperature of the exhaust gas in the exhaust gas cleaner 3.

In an actual engine operation, the temperature of an exhaust gas discharged from the engine may change from time to time depending on driving conditions. Accordingly, to ensure high-efficiency cleaning of the exhaust gas, the temperature of the exhaust gas is preferably adjusted within the above range. One example of such a control is shown below. First, a valve for controlling the flow rate of the exhaust gas and a means for sensing the temperature of the exhaust gas are mounted in the exhaust gas pipe 2 at positions upstream of the exhaust gas cleaner, and the flow rate control valve is throttled whenever the temperature of the exhaust gas becomes lower than the lower limit of the above range, to increase the temperature of the exhaust gas. Oppositely, in the case of lowering the temperature of the exhaust gas, the flow rate control valve is opened.

[C] Contact Time

How long it takes for the exhaust gas to pass through the exhaust gas cleaner is expressed by a product of a time period during which a unit amount of the exhaust gas is in contact with the exhaust gas cleaner and the amount of the exhaust gas cleaner. This product is defined as "contact time." The unit of the contact time is sec·g/ml, wherein "g" is a weight of the exhaust gas cleaner, and "ml" is a volume of the exhaust gas (converted to a volume under a normal condition of 1 atm and room temperature). For instance, when 1 ml (converted to a volume in a normal state) of an exhaust gas is brought into contact with 1 g of the catalyst (exhaust gas cleaner) for 0.03 seconds, the contact time is 0.03 sec·g/ml.

In the present invention, the contact time is 0.01 sec·g/ml or more. When the contact time is less than 0.01 sec·g/ml, a sufficient reaction does not take place between the nitrogen oxides and the reducing agent, resulting in a low removal ratio of nitrogen oxides. Also, the unreacted reducing agent remains in the exhaust gas which is to be discharged.

On the other hand, when the contact time is too large, NOx-removing efficiency is low. Accordingly, the upper limit of the contact time is preferably 0.3 sec·g/ml.

The method of the present invention is particularly advantageous when the exhaust gas flows at a high space velocity. In this case, the exhaust gas is brought into contact with the exhaust gas cleaner for a very short period of time. Even at such a high space velocity, the reduction reaction of NOx takes place efficiently because the hydrocarbon introduced into the exhaust gas and NOx are effectively reacted on the exhaust gas cleaner.

Incidentally, in the above explanations, the term "Ag or its oxide" means that Ag may exist in the form of a metal or an oxide.

The present invention will be described in further detail by way of the following Examples. In each Example and Comparative Example, the Ag or its oxide is described by Ag alone for simplicity, and the amount of Ag is expressed on a metal basis.

## Example 1

10 g of commercially available pellets made of $\gamma$-alumina (diameter: 1.5 mm, length: about 6 mm, specific surface area: 200 $m^2$/g) was charged into a reaction pipe, and a test gas having a composition shown in Table 1 below was caused to pass through the reaction pipe at a rate of 2 liters per minute (in a normal state).

Table 1

| Component | Concentration |
|---|---|
| Nitrogen monoxide | 500 ppm |
| Carbon dioxide | 10 volume % |
| Oxygen | 10 volume % |
| Acetylene | 500 ppm |
| Nitrogen | Balance |
| Water | 10 volume % based on the total (100 volume %) of the above components. |

The contact time of the test gas was 0.3 sec • g/ml, and the temperature of the test gas was 300-550°C in the reaction pipe to cause a reaction between the nitrogen monoxide in the test gas with acetylene.

By passing through the reaction pipe, nitrogen monoxide was converted to nitrogen and nitrogen dioxide. Accordingly, the concentration of NOx (sum of nitrogen monoxide and nitrogen dioxide) in the test gas after passing through the exhaust gas cleaner was measured by a chemiluminescence analyzer to determine the removal ratio of NOx. The results are shown in Table 2.

## Comparative Examples 1-3

Example 1 was repeated except for using ethylene, propylene and propane each in an amount of 500 ppm on a dry basis in place of acetylene in the test gas, and the removal ratio of NOx was measured under the same conditions as in Example 1. The results are shown in Table 2.

Table 2

| No. | Additive | Removal Ratio (%)[1] of NOx at | | | | | |
|---|---|---|---|---|---|---|---|
| | | 300°C | 350°C | 400°C | 450°C | 500°C | 550°C |
| Ex. 1 | Acetylene | 2 | 8 | 32 | 45 | 45 | 33 |
| Com. Ex. 1 | Ethylene | 0 | 1 | 3 | 3 | 5 | 2 |
| Com. Ex. 2 | Propylene | 0 | 1 | 4 | 10 | 22 | 28 |
| Com. Ex. 3 | Propane | 0 | 0 | 1 | 4 | 17 | 33 |

Note: (1) Calculated from the amount (A) of NO in the test gas before entering the exhaust gas cleaner and the total amount (B) of NO and $NO_2$ in the exhaust gas which passed through the exhaust gas cleaner, by the formula: $(A-B)/A \times 100\%$ .

As is clear from Table 2, the exhaust gas cleaner of Example 1 is effective for removing NO. Particularly, the removal ratio of NOx is high in a temperature range of 400-550°C.

## Example 2

With the concentration of acetylene varying from 100 ppm to 800 ppm, Example 1 was repeated while keeping the temperature of the test gas at 475°C in the reaction pipe. The removal ratio of NOx was measured under the same conditions as in Example 1. The results are shown in Table 3.

Table 3

| Acetylene Concentration (ppm) | Removal Ratio of NOx (%) |
|---|---|
| 100 | 15 |
| 200 | 26 |
| 300 | 30 |
| 400 | 38 |
| 500 | 47 |
| 600 | 52 |
| 700 | 56 |
| 800 | 82 |

As is clear from Table 3, as the concentration of acetylene increases, the removal ratio of NOx increases.

## Example 3

With the contact time of the test gas varying from 0.15 sec • g/ml to 0.60 sec • g/ml, and with the temperature of the test gas varying from 400°C to 550°C in the reaction pipe, Example 1 was repeated to measure the removal ratio of NOx. The results are shown in Table 4.

Table 4

| Contact Time sec • g/ml) | Removal Ratio (%) of NOx at | | | |
|---|---|---|---|---|
| | 400°C | 450°C | 500°C | 550°C |
| 0.15 | 18 | 34 | 40 | 40 |
| 0.30 | 32 | 45 | 45 | 33 |
| 0.45 | 41 | 57 | 54 | 44 |
| 0.60 | 53 | 61 | 54 | 44 |

## Example 4

With the concentrations of nitrogen monoxide and acetylene varying from 200 ppm to 1000 ppm at a constant molar ratio of 1:1, Example 1 was repeated to measure the removal ratio of NOx at a temperature of 475°C in the reaction pipe. The results are shown in Table 5.

Table 5

| Concentration of NO (ppm) | Concentration of Acetylene (ppm) | Removal Ratio of NOx (%) |
|---|---|---|
| 200 | 200 | 33 |
| 500 | 500 | 47 |
| 1000 | 1000 | 55 |

As is clear from Table 5, in the NO concentration range of 200-1000 ppm, as the concentration of NO increased, the removal ratio of NOx increased.

## Example 5, Comparative Example 4

The same $\gamma$-alumina pellets as in Example 1 were immersed in an aqueous solution of $AgNO_3$ (concentration: 0.02 g/ml), dried at 70°C and burned at 150°C, 200°C, 300°C, 400°C and 500°C each for 2 hours in a nitrogen stream containing 5 volume % of hydrogen and finally at 500°C for 2 hours in a nitrogen stream containing 10 volume % of oxygen, to obtain an exhaust gas cleaner in which 1 weight % (on a silver metal basis) of Ag was supported by the pellets. With the above exhaust gas cleaner, the same measurement of the removal ratio of NOx as in Example 1 was conducted. The results are shown in Table 6.

For comparison, Example 5 was repeated except for keeping the temperature of the exhaust gas in the exhaust gas cleaner in the reaction pipe at 600°C, and the same measurement as in Example 5 was conducted. The results are shown in Table 6.

## Example 6

The same $\gamma$-alumina pellets as in Example 1 were immersed in an aqueous solution of $AgNO_3$ (concentration: 0.02 g/ml), dried at 70°C and burned at 100°C, 200°C, 300°C, and 400°C each for 2 hours in the air, to obtain an exhaust gas cleaner in which 1 weight % (on a silver metal basis) of Ag was supported by the pellets. With the above exhaust gas cleaner, the same measurement of the removal ratio of NOx as in Example 1 was conducted. The results are shown in Table 6.

Table 6

| No. | Additive | Removal Ratio (%) of NOx at | | | | | | | |
|---|---|---|---|---|---|---|---|---|---|
| | | 250°C | 300°C | 350°C | 400°C | 450°C | 500°C | 550°C | 600°C |
| Ex. 5 | Acetylene | 23 | 34 | 47 | 52 | 43 | 35 | 30 | - |
| Ex. 6 | Acetylene | 11 | 15 | 29 | 40 | 39 | 32 | 17 | - |
| Comp. Ex. 4 | Acetylene | - | - | - | - | - | - | - | 10 |

## Examples 7-9

With ethylene, propylene and propane in place of acetylene, Example 5 was repeated at a temperature of the exhaust gas in the exhaust gas cleaner in the reaction pipe from 400°C to 600°C, and the same measurement as in Example 5 was conducted. The results are shown in Table 7.

Table 7

| No. | Additive | Removal Ratio (%) of NOx at | | | | |
|---|---|---|---|---|---|---|
| | | 400°C | 450°C | 500°C | 550°C | 600°C |
| Ex. 7 | Ethylene | 2 | 5 | 10 | 18 | - |
| Ex. 8 | Propylene | 13 | 21 | 29 | 30 | 8 |
| Ex. 9 | Propane | 4 | 10 | 23 | 32 | 24 |

## Example 10

12 g of commercially available pellets made of $\gamma$-alumina (diameter: 1.5 mm, length: about 6 mm, specific surface area: 200 $m^2$/g) were immersed in an aqueous solution of $AgNO_3$ (concentration: 0.02 g/ml), dried at 70°C and burned at 150°C, 200°C, 300°C, 400°C and 500°C each for 2 hours in a nitrogen stream containing 5 volume % of hydrogen and finally at 500°C for 2 hours in a nitrogen stream containing 10 volume % of oxygen, to obtain an exhaust gas cleaner in which 1 weight % (on a silver metal basis) of Ag was supported by the γ-alumina pellets.

The resulting exhaust gas cleaner was charged into a reaction pipe, and a test gas having a composition shown in Table 8 below was caused to pass through the reaction pipe at a rate of 2 liters per minute (in a normal state). Diesel oil was introduced into a stream of the exhaust gas on the upstream side of the exhaust gas cleaner in such an amount that a weight ratio of diesel oil to the nitrogen oxides in the exhaust gas was 2 ( diesel oil added: 4.8 mg/minute). With the temperature of the exhaust gas in the exhaust gas cleaner varying from 350°C to 550°C, the gasified diesel oil was caused to react with the nitrogen oxides in the exhaust gas.

Table 8

| Component | Concentration |
|---|---|
| Nitrogen monoxide | 1500 ppm |
| Oxygen | 10 volume % |
| Moisture | 10 volume % |
| Nitrogen | Balance |
| Diesel Oil | 8.04 mg/min (two times the weight of NO) |

The concentration of NOx (sum of nitrogen monoxide and nitrogen dioxide) in the test gas which passed through the reaction pipe was measured by a chemiluminescence analyzer to determine the removal ratio of NOx. The results are shown in Table 9.

### Example 11

Example 10 was repeated except for using the exhaust gas cleaner without Ag or its oxide, and the removal ratio of NOx was measured under the same conditions as in Example 10. The results are shown in Table 9.

### Example 13

10 g of commercially available pellets made of γ-alumina (diameter: 1.5 mm, length: about 6 mm, specific surface area: 200 $m^2$/g) were immersed in an aqueous solution of $AgNO_3$ (concentration: 0.035 g/ml), dried at 70°C and burned at 150°C, 200°C, 300°C, 400°C and 500°C each for 2 hours in a nitrogen stream containing 5 volume % of hydrogen and finally at 500°C for 2 hours in a nitrogen stream containing 10 volume % of oxygen, to obtain an exhaust gas cleaner in which 2 weight % (on a silver metal basis) of Ag was supported by the γ-alumina pellets.

The resulting exhaust gas cleaner was charged into a reaction pipe, and a test gas having a composition shown in Table 10 below was caused to pass through the reaction pipe at a rate of 2 liters per minute (in a normal state). While changing the temperature of the exhaust gas in the exhaust gas cleaner from 350°C to 550°C, the added ethylene was caused to react with the nitrogen oxides in the exhaust gas.

Table 10

| Component | Concentration |
|---|---|
| Nitrogen monoxide | 500 ppm |
| Carbon Dioxide | 10 volume % |
| Oxygen | 10 volume % |
| Ethylene | 500 ppm |
| Nitrogen | Balance |
| Moisture | 10 volume % based on the total (100 volume %) of the above components. |

The concentration of NOx (sum of nitrogen monoxide and nitrogen dioxide) in the test gas which passed through the reaction pipe was measured by a chemiluminescence analyzer to determine the removal ratio of NOx. The results are shown in Fig. 2.

## Example 14

With the same exhaust gas cleaner as in Example 13, Example 13 was repeated by using the same test gas as shown in Table 10 except for containing propylene instead of ethylene to measure the removal ratio of NOx. The results are shown in Fig. 2.

## Example 15

With the same exhaust gas cleaner as in Example 13, Example 13 was repeated by using the same test gas as shown in Table 10 except for containing propane instead of ethylene to measure the removal ratio of NOx. The results are shown in Fig. 2.

## Comparative Example 5

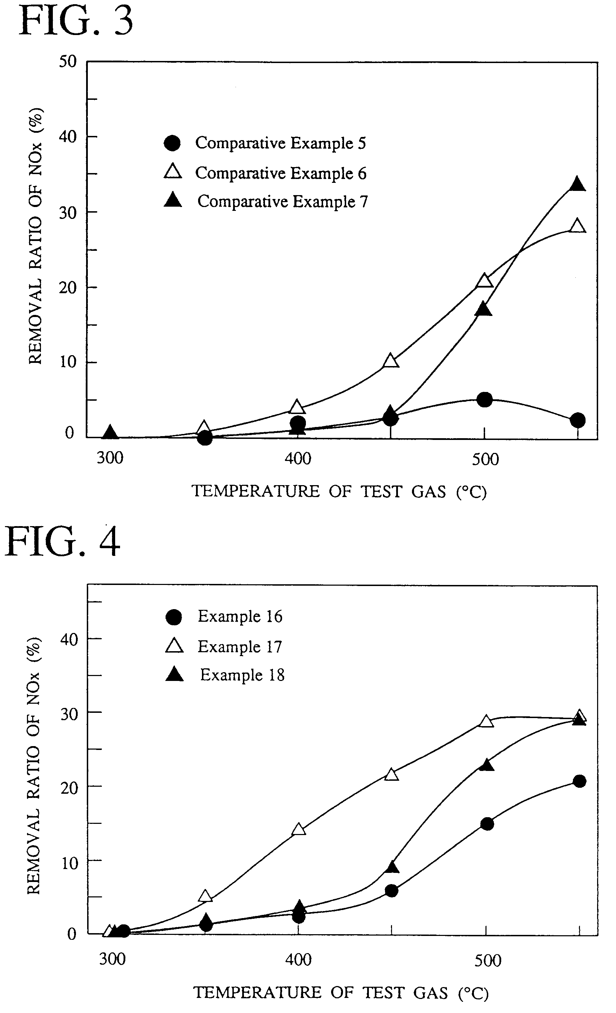

The same $\gamma$-$Al_2O_3$ pellets as in Example 13 were used without carrying Ag or its oxide, and Example 13 was repeated using the same test gas as shown in Table 10. The removal ratio of NOx was measured under the same conditions as in Example 13. The results are shown in Fig. 3.

## Comparative Example 6

The same $\gamma$-$Al_2O_3$ pellets as in Example 13 were used without carrying Ag or its oxide, and Example 13 was repeated using the same test gas as shown in Table 10 except for containing propylene instead of ethylene. The removal ratio of NOx was measured under the same conditions as in Example 13. The results are shown in Fig. 3.

## Comparative Example 7

The same $\gamma$-$Al_2O_3$ pellets as in Example 13 were used without carrying Ag or its oxide, and Example 13 was repeated using the same test gas as shown in Table 10 except for containing propane instead of ethylene. The removal ratio of NOx was measured under the same conditions as in Example 13. The results are shown in Fig. 3.

## Example 16

The same $\gamma$-$Al_2O_3$ pellets as in Example 13 were used with 0.5 weight % of Ag supported thereby, and Example 13 was repeated using the same test gas as shown in Table 10. The removal ratio of NOx was measured under the same conditions as in Example 13. The results are shown in Fig. 4.

## Example 17

The same $\gamma$-$Al_2O_3$ pellets as in Example 13 were used with 0.5 weight % of Ag supported thereby, and Example 13 was repeated using the same test gas as shown in Table 10 except for containing propylene instead of ethylene. The removal ratio of NOx was measured under the same conditions as in Example 13. The results are shown in Fig. 4.

## Example 18

The same $\gamma$-$Al_2O_3$ pellets as in Example 13 were used with 0.5 weight % of Ag supported thereby, and Example 13 was repeated using the same test gas as shown in Table 10 except for containing propane instead of ethylene. The removal ratio of NOx was measured under the same conditions as in Example 13. The results are shown in Fig. 4.

## Example 19

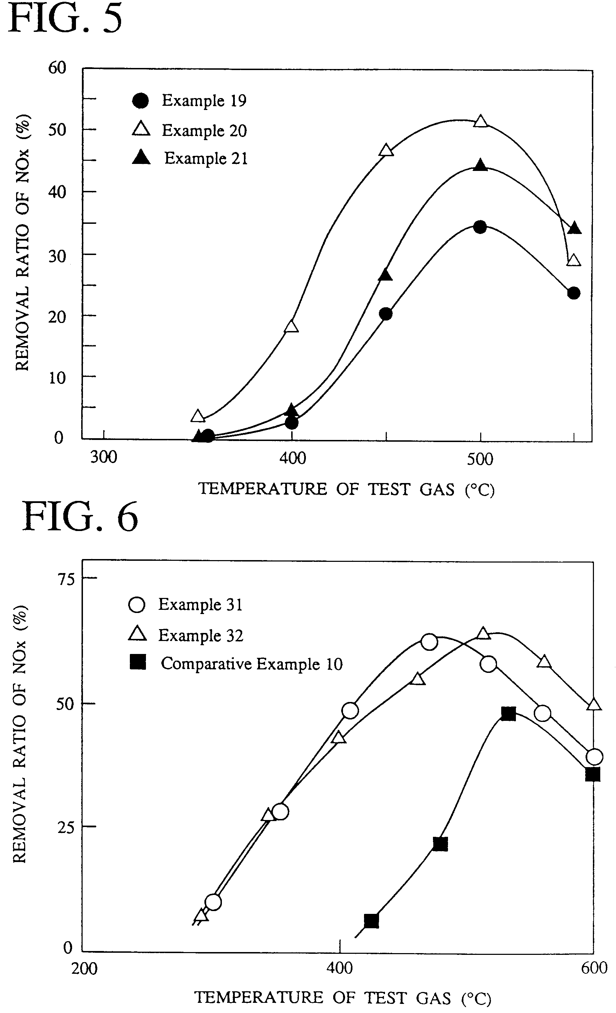

The same $\gamma$-$Al_2O_3$ pellets as in Example 13 were used with 4 weight % of Ag supported thereby, and Example 13 was repeated using the same test gas as shown in Table 10. The removal ratio of NOx was measured under the same conditions as in Example 13. The results are shown in Fig. 5.

## Example 20

The same $\gamma$-Al$_2$O$_3$ pellets as in Example 13 were used with 4 weight % of Ag supported thereby, and Example 13 was repeated using the same test gas as shown in Table 10 except for containing propylene instead of ethylene. The removal ratio of NOx was measured under the same conditions as in Example 13. The results are shown in Fig. 5.

## Example 21

The same $\gamma$-Al$_2$O$_3$ pellets as in Example 13 were used with 4 weight % of Ag supported thereby, and Example 13 was repeated using the same test gas as shown in Table 10 except for containing propane instead of ethylene. The removal ratio of NOx was measured under the same conditions as in Example 13. The results are shown in Fig. 5.

As is clear from Figs. 2-5, the nitrogen oxides in the exhaust gas can be efficiently removed by using the exhaust gas cleaner of the present invention (Examples 13-21) at a temperature of 400-550°C. On the other hand, those containing no Ag or its oxide in Comparative Examples 5-7 failed to remove the nitrogen oxides efficiently at a temperature of lower than 550°C.

## Example 22

10 g of commercially available pellets made of $\gamma$-alumina (diameter: 1.5 mm, length: about 6 mm, specific surface area: 200 m$^2$/g) were immersed in an aqueous solution of AgNO$_3$ (concentration: 0.035 g/ml), dried at 70°C and burned at 100°C, 125°C, 150°C and 200°C each for 2 hours and at 300°C for 30 minutes in a nitrogen stream containing 5 volume % of hydrogen, and the nitrogen gas was purged with a hydrogen gas. Thereafter, the $\gamma$-alumina pellets were burned at 300°C, 400°C and 500°C each for 2 hours and at 550°C for 5 hours in a nitrogen stream containing 10 volume % of oxygen, 10 volume % of moisture, and 10 volume % of carbon dioxide, to obtain an exhaust gas cleaner in which 2 weight % (on a silver metal basis) of Ag was supported by the $\gamma$-alumina pellets.

The resulting exhaust gas cleaner was charged into a reaction pipe, and a test gas having a composition shown in Table 11 below was caused to pass through the reaction pipe at a rate of 2 liters per minute (in a normal state). While changing the temperature of the exhaust gas in the exhaust gas cleaner from 200 to 600°C, the added ethanol was caused to react with the nitrogen oxides in the exhaust gas.

Table 11

| Component | Concentration |
|---|---|
| Nitrogen monoxide | 500 ppm |
| Carbon Dioxide | 10 volume % |
| Oxygen | 10 volume % |
| Ethanol | 500 ppm |
| Nitrogen | Balance |
| Moisture | 10 vol. % based on the total (100 vol. %) of the above components. |

The concentration of NOx (sum of nitrogen monoxide and nitrogen dioxide) in the test gas which passed through the reaction pipe was measured by a chemiluminescence analyzer to determine the removal ratio of NOx. The results are shown in Table 12.

## Comparative Example 8

Example 22 was repeated except for adding a test gas containing methanol instead of ethanol, and the removal ratio of NOx was measured under the same conditions as in Example 22. The results are shown in Table 12.

## Comparative Example 9

The same $\gamma$-Al$_2$O$_3$ pellets as in Example 22 were used without carrying Ag, and Example 22 was repeated using such pellets. The removal ratio of NOx was measured under the same conditions as in Example 22. The results are shown in Table 12.

## Example 23

With the same exhaust gas cleaner as in Example 22, Example 22 was repeated by using the same test gas as shown in Table 11 except for containing acetone (500 ppm) instead of ethanol to measure the removal ratio of NOx. The results are shown in Table 12.

## Example 24

With the same exhaust gas cleaner as in Example 22, Example 22 was repeated by using the same test gas as shown in Table 11 except for containing acetic acid (500 ppm) instead of ethanol to measure the removal ratio of NOx. The results are shown in Table 12.

## Example 25

With the same exhaust gas cleaner as in Example 22, Example 22 was repeated by using the same test gas as shown in Table 11 except for containing acetaldehyde (500 ppm) instead of ethanol to measure the removal ratio of NOx. The results are shown in Table 12.

## Example 26

With the same exhaust gas cleaner as in Example 22, Example 22 was repeated by using the same test gas as shown in Table 11 except for containing 2-propanol (isopropyl alcohol) (333 ppm) instead of ethanol to measure the removal ratio of NOx. The results are shown in Table 12.

## Example 27

With the same exhaust gas cleaner as in Example 22, Example 22 was repeated by using the same test gas as shown in Table 11 except for containing 1-propanol (n-propyl alcohol) (333 ppm) instead of ethanol to measure the removal ratio of NOx. The results are shown in Table 12.

## Example 28

10 g of commercially available pellets made of $\gamma$-alumina (diameter: 1.5 mm, length: about 6 mm, specific surface area: 200 $m^2$/g) were immersed in an aqueous solution of $AgNO_3$ (concentration: 0.035 g/ml), dried at 70°C and burned at 100°C, 125°C, 150°C and 200°C each for 2 hours and at 300°C for 30 minutes in a nitrogen stream containing 50 volume % of hydrogen, and the nitrogen gas was purged with a hydrogen gas. Thereafter, the $\gamma$-alumina pellets were burned at 300°C, 400°C and 500°C each for 2 hours and at 550°C for 5 hours in a nitrogen stream containing 10 volume % of oxygen, 10 volume % of moisture, and 10 volume % of carbon dioxide, to obtain an exhaust gas cleaner in which 2 weight % (on a silver metal basis) of Ag was supported by the $\gamma$-alumina pellets.

With this exhaust gas cleaner, Example 22 was repeated by using the same test gas as shown in Table 11. The results are shown in Table 12.

Table 12

### Removal Ratio (%) of NOx at

| No. | Additive | 200°C | 250°C | 300°C | 350°C |
|---|---|---|---|---|---|
| Ex. 22 | Ethanol | 40 | 76 | 92 | 92 |
| Ex. 23 | Acetone | 45 | 89 | 98.9 | 99.3 |
| Ex. 24 | Acetic Acid | - | 6 | 31 | 38 |
| Ex. 25 | Acetaldehyde | 36.9 | 67.2 | 76.9 | 76.8 |
| Ex. 26 | 2-Propanol | 55 | 94 | 98 | 98.5 |
| Ex. 27 | 1-Propanol | 58 | 79 | 82.5 | 75.3 |
| Ex. 28 | Ethanol | 48.6 | 86.7 | 95.2 | 90.4 |
| Com. Ex. 8 | Methanol | - | 15 | 12 | 12 |
| Com. Ex. 9 | Ethanol | - | 9 | 27 | 11 |

Table 12 (Continued)

### Removal Ratio (%) of NOx at

| No. | 400°C | 450°C | 500°C | 550°C | 600°C |
|---|---|---|---|---|---|
| Ex. 22 | 87 | 78 | 63 | 45 | - |
| Ex. 23 | 99.2 | 97.6 | 85 | 60 | - |
| Ex. 24 | 52 | 58 | 51 | 41 | 35 |
| Ex. 25 | 72.7 | 64.4 | 48.5 | 21.8 | - |
| Ex. 26 | 97.0 | 86.6 | 88.3 | 46.2 | - |
| Ex. 27 | 65.6 | 56.7 | 44.9 | 30.0 | - |
| Ex. 28 | 84.2 | 75.6 | 60.7 | 40.5 | - |
| Com. Ex. 8 | 6.5 | 3.1 | 1.6 | 1.3 | - |
| Com. Ex. 9 | 6 | 6.6 | 10 | 28 | - |

As is clear from Table 12, the nitrogen oxides in the exhaust gas can be efficiently removed by the method of the present invention (Examples 22, 23 and 25) at a temperature of 200-550°C. Efficient removal of nitrogen oxides was also achieved at 300-600°C in Example 24. In the temperature range of 250-400°C, the removal ratio of nitrogen oxides was more than 75% in Examples 22 and 23. Further, in Examples 26 and 27, high efficiency of removing NOx can be obtained at 250-500°C. Also, in Example 28 which used the exhaust gas cleaner burned in an atmosphere having a large hydrogen concentration, high removal ratio of NOx was achieved at a low temperature. On the other hand, those in Comparative Examples 8 and 9 failed to remove the nitrogen oxides efficiently.

## Example 29

10 g of commercially available pellets made of $\gamma$-alumina (diameter: 1.5 mm, length: about 6 mm, specific surface area: 200 $m^2$/g) were immersed in an aqueous solution of $AgNO_3$ (concentration: 0.035 g/ml), dried at 70°C and burned at 100°C, 125°C, 150°C and 200°C each for 2 hours and at 300°C for 30 minutes in a nitrogen stream containing 5 volume % of hydrogen, and the nitrogen gas was purged with a hydrogen gas. Thereafter, the $\gamma$-alumina pellets were burned at 300°C, 400°C and 500°C each for 2 hours and at 550°C for 5 hours in a nitrogen stream containing 10 volume % of oxygen, 10 volume % of moisture, and 10 volume % of carbon dioxide, to obtain an exhaust gas cleaner in which 2 weight % (on a silver metal basis) of Ag was supported by the $\gamma$-alumina pellets.

The resulting exhaust gas cleaner was brought into contact with a test gas shown in Table 13 mixed with 2 mmol of $SO_2$ for 1 hour. The $SO_2$-treated exhaust gas cleaner was charged into a reaction pipe, and the test gas shown in Table 13 was caused to pass through the reaction pipe at a rate of 2 liters per minute (in a normal state). While changing the temperature of the exhaust gas in the exhaust gas cleaner from 250°C to 550°C, the added ethanol was caused to react with the nitrogen oxides in the exhaust gas.

Table 13

| Component | Concentration |
|---|---|
| Nitrogen monoxide | 500 ppm |
| Carbon Dioxide | 10 volume % |
| Oxygen | 10 volume % |
| Ethanol | 500 ppm |
| Nitrogen | Balance |
| Moisture | 10 volume % based on the total (100 volume %) of the above components. |

The concentration of NOx (sum of nitrogen monoxide and nitrogen dioxide) in the test gas which passed through the reaction pipe was measured by a chemiluminescence analyzer to determine the removal ratio of NOx. The results are shown in Table 14.

## Example 30

Example 29 was repeated except for using a test gas containing propylene (500 ppm) instead of ethanol, and the removal ratio of NOx was measured under the same conditions as in Example 29. The results are shown in Table 14.

Table 14

| No. | Additive | Removal Ratio (%) of NOx at | | | | | | |
|---|---|---|---|---|---|---|---|---|
| | | 250°C | 300°C | 350°C | 400°C | 450°C | 500°C | 550°C |
| Ex. 29 | Ethanol | 82.9 | 96.6 | 96.5 | 92.0 | 79.9 | 62.5 | 44.2 |
| Ex. 30 | Propylene | - | 16.0 | 29.7 | 60.7 | 66.9 | 64.1 | 43.2 |

As is clear from Table 14, the nitrogen oxides in the exhaust gas can be efficiently removed by using the exhaust gas cleaner treated with $SO_2$.

## Example 31

10 g of commercially available pellets made of $\gamma$-alumina (diameter: 1.5 mm, length: about 6 mm, specific surface area: 200 $m^2$/g) were immersed in an aqueous solution of $AgNO_3$, dried at 70°C and burned at 150°C, 200°C, 300°C, 400°C, 500°C and 600°C each for 2 hours in a nitrogen stream containing 5 volume % of hydrogen, and the nitrogen gas was purged with a hydrogen gas. Thereafter, the $\gamma$-alumina pellets were burned at 500°C for 2 hours in a nitrogen stream containing 10 volume % of oxygen, to obtain an exhaust gas cleaner in which 6 weight % (on a silver metal basis) of Ag was supported by the $\gamma$-alumina pellets.

1.5 g of the resulting exhaust gas cleaner was charged into a reaction pipe, and a test gas shown in Table 15 was caused to pass through the reaction pipe at a rate of 1.7 liters per minute (in a normal state). The contact time of the exhaust gas was 0.05 sec·g/ml. While changing the temperature of the exhaust gas in the exhaust gas cleaner from 300 to 600°C, the added propylene was caused to react with the nitrogen oxides in the exhaust gas.

Table 15

| Component | Concentration |
|-----------|---------------|
| Nitrogen monoxide | 800 ppm |
| Carbon Dioxide | 10 volume % |
| Oxygen | 10 volume % |
| Propylene | 1714 ppm |
| Nitrogen | Balance |
| Moisture | 10 volume % based on the total (100 volume %) of the above components. |

The concentration of NOx (sum of nitrogen monoxide and nitrogen dioxide) in the test gas which passed through the reaction pipe was measured by a chemiluminescence analyzer to determine the removal ratio of NOx. The results are shown in Fig. 6.

### Example 32

Example 31 was repeated except for using the $\gamma$-Al$_2$O$_3$ pellets carrying 8 weight % of Ag, and the removal ratio of NOx was measured under the same conditions as in Example 31. The results are shown in Fig. 6.

### Comparative Example 10

The same $\gamma$-Al$_2$O$_3$ pellets as in Example 31 were used without carrying Ag, and Example 31 was repeated using the same test gas as shown in Table 15. The removal ratio of NOx was measured under the same conditions as in Example 31. The results are shown in Fig. 6.

As is clear from Fig. 6, the nitrogen oxides in the exhaust gas can be efficiently removed by using the exhaust gas cleaner of the present invention (Examples 31 and 32) at a temperature of 300-600°C. On the other hand, those containing no Ag in Comparative Example 10 failed to remove the nitrogen oxides efficiently at a temperature of lower than 500°C.

As described above in detail, by the exhaust gas cleaning method according to the present invention, NOx can efficiently be removed from the exhaust gas at a temperature of 200-600°C, even when the exhaust gas contains about 10% of moisture.

The method of the present invention is effective for cleaning exhaust gases such as those discharged from diesel engines, which have high oxygen concentrations.

### Claims

1. An exhaust gas cleaner for cleaning an exhaust gas containing nitrogen oxides and oxygen in an amount larger than its stoichiometric amount relative to unburned components in said exhaust gas, which comprises a heat-resistant, porous inorganic oxide body having a specific surface area of 30 m$^2$/g or more made of $\gamma$-alumina and which is impregnated with a catalytically active component consisting essentially of Ag or its oxide, the amount of said Ag or its oxide on a silver metal basis being 0.1-15 weight % based on said porous inorganic oxide body.

2. A method of cleaning an exhaust gas containing nitrogen oxides and oxygen in an amount larger than its stoichiometric amount relative to unburned components in said exhaust gas, which comprises

(a) disposing an exhaust gas cleaner which comprises a heat-resistant, porous inorganic oxide body made of $\gamma$-alumina and which is impregnated with catalytically active component consisting essentially of Ag or its oxide, the amount of said Ag or its oxide on a silver metal basis being 0.1-6 weight % based on said porous inorganic oxide body;

(b) introducing a reducing agent selected from the group consisting of gaseous hydrocarbons and liquid hydrocarbons into said exhaust gas on the upstream side of said exhaust gas cleaner; and

(c) bringing said exhaust gas containing said reducing agent into contact with said exhaust gas cleaner at a temperature of 200-600°C to cause a reaction between said nitrogen oxides and said reducing agent, thereby removing said nitrogen oxides.

3. A method as claimed in claim 2, wherein said reducing agent is a gaseous hydrocarbon in an amount of 20-400 volume % based on said nitrogen oxides.

4. A method as claimed in either of claims 2 and 3, wherein said reducing agent is acetylene.

5. A method as claimed in claim 4, wherein the exhaust gas containing said acetylene is brought into contact with said exhaust gas cleaner at a temperature of 250-550°C.

6. A method as claimed in claim 2, wherein said reducing agent is a liquid hydrocarbon at a weight ratio of 0.2-5 to said nitrogen oxides.

7. A method as claimed in claim 6, wherein the exhaust gas containing said liquid hydrocarbon is brought into contact with said exhaust gas cleaner at a temperature of 300-550°C.

8. A method as claimed in any one of claims 2 to 7, wherein the contact time of said exhaust gas with said exhaust gas cleaner is 0.01 sec.g/ml or more.

9. A method as claimed in any one of claims 2 to 8, wherein said heat-resistant porous inorganic oxide body is made into a layer on a heat-resistant substrate.

10. A method of cleaning an exhaust gas containing nitrogen oxides and oxygen in an amount larger than its stoichiometric amount relative to unburned components in said exhaust gas, which comprises:

(a) disposing an exhaust gas cleaner in a flow path of said exhaust gas, said exhaust gas cleaner comprising a heat-resistant, porous inorganic oxide body made of alumina or a composite oxide thereof and being impregnated with catalytically active component consisting essentially of Ag or its oxide, and the amount of said Ag or its oxide on a silver metal basis being 0.1-15 weight % based on said porous inorganic oxide body;

(b) introducing an aliphatic oxygen-containing organic compound into said exhaust gas on the upstream side of said exhaust gas cleaner; and

(c) bringing the exhaust gas containing said aliphatic oxygen-containing organic compound into contact with said exhaust gas cleaner at a temperature of 200-600°C to cause a reaction between said nitrogen oxides and said aliphatic oxygen-containing organic compound, thereby removing said nitrogen oxides.

11. A method as claimed in claim 10, wherein the weight ratio of said aliphatic oxygen-containing organic compound to said nitrogen oxides is 0.2-4.

12. A method as claimed in claim 10 or claim 11, wherein a contact time of said exhaust gas with said exhaust gas cleaner is 0.01 sec.g/ml or more.

13. A method as claimed in any one of claims 10 to 12, wherein said heat-resistant, porous inorganic oxide body is made into a layer on a heat-resistant substrate.

**Patentansprüche**

1. Abgasreiniger zum Reinigen eines Abgases, das Stickoxide und Sauerstoff in einer Menge größer als dessen stöchiometrische Menge, bezogen auf die unverbrannten Komponenten des Abgases, enthält, umfassend einen hitzebeständigen, porösen, anorganischen Oxidkörper mit einer spezifischen Oberfläche von 30 $m^2$/g oder mehr, hergestellt aus $\gamma$-Aluminiumoxid und imprägniert mit einer katalytisch aktiven Komponente, die im wesentlichen aus Ag oder dessen Oxid besteht, wobei die Menge des Ag oder dessen Oxids auf Silbermetallbasis 0,1-15 Gew.-%,

bezogen auf den porösen, anorganischen Oxidkörper, beträgt.

2. Verfahren zum Reinigen eines Abgases, das Stickoxide und Sauerstoff in einer Menge größer als dessen stöchiometrische Menge, bezogen auf die unverbrannten Komponenten in dem Abgas, enthält, umfassend

(a) Anordnen eines Abgasreinigers, der einen hitzebeständigen, porösen, anorganischen Oxidkörper, hergestellt aus γ-Aluminiumoxid und imprägniert mit einer katalytisch aktiven Komponente, die im wesentlichen aus Ag oder dessen Oxid besteht, umfaßt, wobei die Menge des Ag oder dessen Oxids auf Silbermetallbasis 0,1-6 Gew.-%, bezogen auf den porösen, anorganischen Oxidkörper, beträgt;
(b) Einführen eines Reduktionsmittels, ausgewählt aus der Gruppe, bestehend aus gasförmigen Kohlenwasserstoffen und flüssigen Kohlenwasserstoffen in das Abgas auf der stromaufwärts gerichteten Seite des Abgasreinigers; und
(c) Inkontaktbringen des das Reduktionsmittel enthaltenden Abgases mit dem Abgasreiniger bei einer Temperatur von 200-600°C unter Veranlassen einer Umsetzung zwischen den Stickoxiden und dem Reduktionsmittel, wodurch die Stickoxide entfernt werden.

3. Verfahren nach Anspruch 2, wobei das Reduktionsmittel ein gasförmiger Kohlenwasserstoff, in einer Menge von 20-400 Volumen-%, bezogen auf die Stickoxide, ist.

4. Verfahren nach einem der Ansprüche 2 und 3, wobei das Reduktionsmittel Acetylen ist.

5. Verfahren nach Anspruch 4, wobei das Abgas, das das Acetylen enthält, mit dem Abgasreiniger bei einer Temperatur von 250-550°C in Kontakt gebracht wird.

6. Verfahren nach Anspruch 2, wobei das Reduktionsmittel ein flüssiger Kohlenwasserstoff, bei einem Gewichtsverhältnis von 0,2-5 zu den Stickoxiden, ist.

7. Verfahren nach Anspruch 6, wobei das den flüssigen Kohlenwasserstoff enthaltende Abgas mit dem Abgasreiniger bei einer Temperatur von 300-550°C in Kontakt gebracht wird.

8. Verfahren nach einem der Ansprüche 2 bis 7, wobei die Kontaktzeit des Abgases mit dem Abgasreiniger 0,01 s • g/ml oder mehr ist.

9. Verfahren nach einem der Ansprüche 2 bis 8, wobei der hitzebeständige, poröse, anorganische Oxidkörper auf einem hitzebeständigen Substrat zu einer Schicht ausgebildet ist.

10. Verfahren zum Reinigen eines Abgases, das Stickoxide und Sauerstoff in einer Menge größer als dessen stöchiometrische Menge, bezogen auf die unverbrannten Komponenten in dem Abgas, enthält, umfassend;

(a) Anordnen eines Abgasreinigers in einen Strömungsgang des Abgases, wobei der Abgasreiniger einen hitzebeständigen, porösen, anorganischen Oxidkörper, hergestellt aus Aluminiumoxid oder einem Verbundoxid davon und imprägniert mit einer katalytisch aktiven Komponente, bestehend im wesentlichen aus Ag oder dessen Oxid, umfaßt, und wobei die Menge des Ag oder dessen Oxids auf Silbermetallbasis 0,1-15 Gew.-%, bezogen auf den porösen, anorganischen Oxidkörper beträgt;
(b) Einführen einer aliphatischen, sauerstoffenthaltenden, organischen Verbindung in das Abgas auf der stromaufwärts gerichteten Seite des Abgasreinigers; und
(c) Inkontaktbringen des die aliphatische, sauerstoffenthaltende, organische Verbindung enthaltenden Abgases mit dem Abgasreiniger bei einer Temperatur von 200-600°C unter Veranlassung einer Umsetzung zwischen den Stickoxiden und der aliphatischen, sauerstoffenthaltenden, organischen Verbindung, wodurch die Stickoxide entfernt werden.

11. Verfahren nach Anspruch 10, wobei das Gewichtsverhältnis der aliphatischen, sauerstoffenthaltenden, organischen Verbindung zu den Stickoxiden 0,2-4 ist.

12. Verfahren nach Anspruch 10 oder Anspruch 11, wobei die Kontaktzeit des Abgases mit dem Abgasreiniger 0,01 s • g/ml oder mehr ist.

13. Verfahren nach einem der Ansprüche 10 bis 12, wobei der hitzebeständige, poröse, anorganische Oxidkörper auf einem hitzebeständigen Substrat zu einer Schicht ausgebildet ist.

**Revendications**

1. Epurateur de gaz d'échappement permettant d'épurer un gaz d'échappement contenant des oxydes d'azote et de l'oxygène dans une quantité supérieure à sa quantité stoechiométrique relative aux composants imbrûlés présents dans ledit gaz d'échappement, qui comprend un corps résistant à la chaleur constitué d'un oxyde inorganique poreux, ayant une surface spécifique de 30 $m^2$/g ou plus, fait en alumine $\gamma$, et qui est imprégné avec un composant à activité catalytique constitué principalement d'Ag ou de son oxyde, la quantité dudit Ag ou de son oxyde, sur la base de l'argent métallique, étant de 0,1 - 15% en poids par rapport audit corps constitué d'un oxyde inorganique poreux.

2. Procédé permettant d'épurer un gaz d'échappement contenant des oxydes d'azote et de l'oxygène dans une quantité supérieure à sa quantité stoechiométrique relative aux composants imbrûlés dans ledit gaz d'échappement, qui comprend les étapes consistant :

   (a) à disposer un épurateur de gaz d'échappement qui comprend un corps résistant à la chaleur, constitué d'un oxyde inorganique poreux, fait en alumine $\gamma$, et qui est imprégné avec un composant à activité catalytique constitué principalement d'Ag ou de son, oxyde, la quantité dudit Ag ou de son oxyde, sur la base de l'argent métallique, étant de 0,1 - 6% en poids par rapport audit corps constitué d'un oxyde inorganique poreux;
   (b) à introduire un agent réducteur choisi parmi le groupe composé des hydrocarbures gazeux et des hydrocarbures liquides, dans ledit gaz d'échappement du côté amont dudit épurateur de gaz d'échappement; et
   (c) à mettre en contact ledit gaz d'échappement contenant ledit agent réducteur avec ledit épurateur de gaz d'échappement, à une température de 200 - 600°C, pour provoquer une réaction entre lesdits oxydes d'azote et ledit agent réducteur, en éliminant de cette façon lesdits oxydes d'azote.

3. Procédé tel que revendiqué dans la revendication 2, dans lequel ledit agent réducteur est un hydrocarbure gazeux dans une quantité de 20 - 400% en volume par rapport aux dits oxydes d'azote.

4. Procédé tel que revendiqué dans l'une quelconque des revendications 2 et 3, dans lequel ledit agent réducteur est de l'acétylène.

5. Procédé tel que revendiqué dans la revendication 4, dans lequel le gaz d'échappement contenant ledit acétylène est mis en contact avec ledit épurateur de gaz d'échappement à une température de 250 - 550°C.

6. Procédé tel que revendiqué dans la revendication 2, dans lequel ledit agent réducteur est un hydrocarbure liquide selon un rapport massique de 0,2 - 5 sur lesdits oxydes d'azote.

7. Procédé tel que revendiqué dans la revendication 6, dans lequel le gaz d'échappement contenant ledit hydrocarbure liquide est mis en contact avec ledit épurateur de gaz d'échappement à une température de 300 - 550°C.

8. Procédé tel que revendiqué dans l'une quelconque des revendications 2 à 7, dans lequel le temps de contact dudit gaz d'échappement avec ledit épurateur de gaz d'échappement est de 0,01 sec.g/ml ou plus.

9. Procédé tel que revendiqué dans l'une quelconque des revendications 2 à 8, dans lequel ledit corps résistant à la chaleur, constitué d'un oxyde inorganique poreux, est façonné sous forme d'une couche sur un substrat résistant à la chaleur.

10. Procédé permettant d'épurer un gaz d'échappement contenant des oxydes d'azote et de l'oxygène dans une quantité supérieure à sa quantité stoechiométrique relative aux composants imbrûlés dans ledit gaz d'échappement, qui comprend les étapes consistant :

   (a) à placer un épurateur de gaz d'échappement dans la voie d'écoulement dudit gaz d'échappement, ledit épurateur de gaz d'échappement comprenant un corps résistant à la chaleur, constitué d'un oxyde inorganique poreux, fait en alumine ou en oxyde composite de celle-ci, et qui est imprégné avec un composant à activité catalytique constitué principalement d'Ag ou de son oxyde, et la quantité dudit Ag ou de son oxyde, sur la base de l'argent métallique, étant de 0,1 - 15% en poids par rapport audit corps constitué d'un oxyde inorganique poreux;
   (b) à introduire un composé organique aliphatique contenant de l'oxygène dans ledit gaz d'échappement du côté amont dudit épurateur de gaz d'échappement; et
   (c) à mettre en contact le gaz d'échappement contenant ledit composé organique aliphatique contenant de l'oxygène avec ledit épurateur de gaz d'échappement, à une température de 200 - 600°C, pour provoquer une réaction entre lesdits oxydes d'azote et ledit composé organique aliphatique contenant de l'oxygène, en éliminant de cette façon lesdits oxydes d'azote.

11. Procédé tel que revendiqué dans la revendication 10, dans lequel le rapport massique dudit composé organique aliphatique contenant de l'oxygène, sur lesdits oxydes d'azote, est de 0,2 - 4.

12. Procédé tel que revendiqué dans la revendication 10 ou dans la revendication 11, dans lequel le temps de contact dudit gaz d'échappement avec ledit épurateur de gaz d'échappement est de 0,01 sec.g/ml ou plus.

13. Procédé tel que revendiqué dans l'une quelconque des revendications 10 à 12, dans lequel ledit corps résistant à la chaleur, constitué d'un oxyde inorganique poreux, est façonné sous forme d'une couche sur un substrat résistant à la chaleur.

# FIG.1

# FIG. 2

# FIG. 3

Legend:
- ● Comparative Example 5
- △ Comparative Example 6
- ▲ Comparative Example 7

Y-axis: REMOVAL RATIO OF NOx (%)
X-axis: TEMPERATURE OF TEST GAS (°C)

# FIG. 4

Legend:
- ● Example 16
- △ Example 17
- ▲ Example 18

Y-axis: REMOVAL RATIO OF NOx (%)
X-axis: TEMPERATURE OF TEST GAS (°C)

# FIG. 5

# FIG. 6